(19) Europäisches Patentamt

European Patent Office

Office européen des brevets

(11) EP 1 271 097 A2

(12) **EUROPEAN PATENT APPLICATION**

(43) Date of publication:
02.01.2003 Bulletin 2003/01

(51) Int Cl.7: **G01B 17/02**

(21) Application number: 02013726.1

(22) Date of filing: 20.06.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 21.06.2001 JP 2001188281

(71) Applicant: **Daido Tokushuko Kabushiki Kaisha Nagoya-shi, Aichi 460-8581 (JP)**

(72) Inventors:
• **Yamada, Ryuzo,
Daido Tokushuko Kabushiki Kaisha
Nagoya-shi, Aichi 457-0054 (JP)**
• **Kaneshige, Kenichi, Daido Tokushuko K. K.
Nagoya-shi, Aichi 457-0054 (JP)**

(74) Representative: **Schorr, Frank, Dr.
Diehl Glaeser Hiltl & Partner,
Augustenstrasse 46
80333 München (DE)**

(54) **Method for inspecting clad pipe**

(57) A method for inspecting a clad pipe, having the steps of: transmitting longitudinal ultrasonic waves with wide-band characteristic to make it incident on an inner surface of a clad pipe, the clad pipe including a metal pipe (10) with a coarse crystal grain structure and a different kind of clad metal built up on an inner surface thereof; and receiving reflected echoes of the longitudinal ultrasonic waves on the inner surface side thereof.

When a flaw (16) generated in an interface between the metal pipe (10) and the different kind of metal is to be detected, the longitudinal ultrasonic waves in a frequency range of 10 to 30 MHz are preferably used as the ultrasonic waves. When the pipe thickness of the clad pipe is to be measured, the longitudinal ultrasonic waves in a frequency range of 2 to 10 MHz are preferably used as the ultrasonic waves.

FIG. 2

EP 1 271 097 A2

**Description**

BACKGROUND OF THE INVENTION

The present invention relates to a method for inspecting a clad pipe. It particularly relates to a method for inspecting a clad pipe having a metal pipe and a different kind of clad metal built up on an inner surface of the metal pipe, such as a line pipe, an oil well pipe or a chemical plant pipe, for adaptation to inspection of a flaw generated in a joint interface of the clad metal cladded on the clad pipe and measurement of the thickness of cladding of the clad pipe.

Ametal pipe used under a severe condition needs to satisfy a plurality of characteristics such as strength, corrosion resistance and thermal fatigue resistance. When the metal pipe is composed of a single material, it is difficult to make such a plurality of characteristics consistent with one another. Therefore, on this occasion, a cladpipe is used as a pipe prepared by cladding such a metal pipe with a different kind of metal on its outer or inner surface. For example, a clad pipe, which comprises a centrifugal cast pipe with a firm crystal structure and a different kind of clad metal built up on the inner surface of the centrifugal cast pipe by a thickness of the order of mm in order to improve corrosion resistance, is expected to be applied to a chemical plant such as a thermal cracking furnace, because the clad pipe has both corrosion resistance and thermal fatigue resistance.

The clad pipe is produced by cladding-by-welding process, dual-layer centrifugal casting process, and so on. To satisfy the required characteristics accurately, the clad pipe is required to be flawlessness in a joint interface between the metal pipe and the different kind of metal, and to have the thickness of cladding not smaller than a predetermined value. It is therefore necessary to inspect the clad pipe for such a flaw in the joint interface and to measure the thickness of cladding of the clad pipe in a nondestructive manner in order to guarantee the quality of the clad pipe.

An ultrasonic inspection method using ultrasonic waves in a frequency range of about 1 to about 15 MHz is generally used for such inspection. Further, a process of making ultrasonic waves incident on the clad pipe perpendicularly or obliquely, in the condition that an ultrasonic probe is disposed on the outer circumferential surface side of the clad pipe, is generally used for the ultrasonic inspection.

If high-frequency ultrasonic waves are made incident on a metal pipe such as a centrifugal cast pipe with a coarse crystal grain structure, it is however impossible to obtain reflected echoes from a flaw or the bottom of the metal pipe because the ultrasonic waves are scattered largely by grain boundaries. If the frequency of the ultrasonic waves is contrariwise reduced, the scatter of the ultrasonic waves in the grain boundaries is reduced but resolving power is lowered.

For this reason, in the case where an interior clad pipe including a metal pipe with a coarse crystal grain structure and a different kind of clad metal built up on an inner circumferential surface of the metal pipe is inspected by the ultrasonic inspection method, there is a problem that sufficient inspection accuracy cannot be obtained when ultrasonic waves are made incident on the outer circumferential surface side of the interior clad pipe.

The outer surface of the centrifugal cast pipe is generally rough in terms of surface roughness. If ultrasonic waves are made incident on the outer surface side of an interior clad pipe containing the centrifugal cast pipe as a main pipe, the ultrasonic waves are scattered by the outer surface of the interior clad pipe. For this reason, there is also a problem that a large error occurs in measurement of the pipe thickness of the interior clad pipe.

In addition, if the acoustic impedance difference between the metal pipe and the cladding metal is small, reflected echoes cannot be obtained from the joint interface good in joint state even in the case where ultrasonic waves are made incident on the clad pipe. For this reason, the thickness of cladding of the clad pipe can hardly be obtained directly by the ultrasonic inspection method.

SUMMARY OF THE INVENTION

An object of the present invention is to improve accuracy in detection of reflected echoes caused by a flaw when a clad pipe including a metal pipe with a coarse crystal grain structure and a different kind of clad metal built up on the inner surface of the metal pipe is inspected by an ultrasonic inspection method.

Another object of the present invention is to provide a clad pipe inspecting method by which the thickness of cladding of the clad pipe can be measured accurately even in the case where the outer circumferential surface of the metal pipe is rough in terms of surface roughness or even in the case where the acoustic impedance difference between the metal pipe and the cladding metal is small.

To solve the problems, as a gist of the present invention, there is provided a method for inspecting a clad pipe, comprising the steps of: preparing a clad pipe including a metal pipe with a coarse crystal grain structure and a different kind of clad metal built up on an inner surface of the metal pipe; transmitting longitudinal ultrasonic waves with wide-band characteristic to make the ultrasonic waves incident on an inner surface of the cladpipe; and receiving reflected echoes of the longitudinal ultrasonic waves on the inner surface side of the clad pipe.

When ultrasonic waves are made incident on the inner surface of the interior clad pipe which includes a metal pipe with a coarse crystal grain structure and a different kind of clad metal built up on the inner surface of the metal pipe, a reflected part of the ultrasonic waves caused by a flaw generated in an interface between the metal pipe and the different kind of metal and cladded metal, that is, a second reflected echo passes through the layer of the different kind of metal but is not propagated through the metal pipe because the metal pipe scatters the ultrasonic waves largely. Accordingly, high-frequency ultrasonic waves can be used for detection of such a flaw, so that flaw detecting accuracy is improved.

On the other hand, for measurement of the pipe thickness of the interior clad pipe when ultrasonic waves are made incident on the inner surface of the interior clad pipe, it is necessary to detect a third reflected echo reflected from the inner surface and a fourth reflected echo reflected from the outer surface. The fourth reflected echo is propagated through both the layer of the different kind of metal and the metal pipe. Accordingly, the fourth reflected echo can be detected with great accuracy when ultrasonic waves with a frequency lower than that of ultrasonic waves used for detection of a flaw are used for measurement of the pipe thickness.

The surface roughness of the different kind of clad metal built up on the inner surface of the metal pipe is relatively small. Accordingly, when the pipe thickness is measured from the inner surface side of the interior clad pipe, scatter of ultrasonic waves in the incident surface is suppressed so that accuracy in measurement of the pipe thickness is improved.

BRIEF DESCRIPTION OF THE DRAWINGS

Fig. 1 is a conceptual view showing the pipe thickness measuring step;
Fig. 2 is a conceptual view showing that the pipe thickness measuring step and flaw inspection step are carried out alternatively;
Fig. 3 is a graph showing the waveform of a flaw measured by a method according to Example 1;
Fig. 4 is a graph showing the waveform of a flaw measured by a method according to Comparative Example 1;
Fig. 5 is a graph showing the relation between a position of the clad pipe in the lengthwise direction and a measured value of the pipe thickness measured by a method according to Example 2;
Fig. 6 is a graph showing the relation between a position of the clad pipe in the lengthwise direction and a measured value of the pipe thickness measured by a method according to Comparative Example 2;
Fig. 7 is a view showing a cladding-welded portion formed by welding beads (cladding material) spreading all over the inner surface of a member (metal pipe);
Fig. 8 is a view showing flaws each generated to spread obliquely along a fusion line of an overlap portion between welding beads;

Fig. 9 is a graph showing a relation between an ultrasonic wave incidence angle of a flaw echo reflected from a natural flaw and a height of the reflected echo;
Figs . 10A and 10B are conceptual views showing the relation between third and fourth reflected echoes respectively reflected from the outer and inner surfaces of the clad pipe at a portion where no flaw is present, and at another portion where a flaw is present;
Fig. 11 is a conceptual view in which pipe thickness information obtained continuously shows a sudden change at a portion where a flaw is present; and
Figs. 12A and 12B are views showing a flaw distinguished by use of the method for Example 4.

DESCRIPTION OF THE PREFFERERED EMBODIMENTS

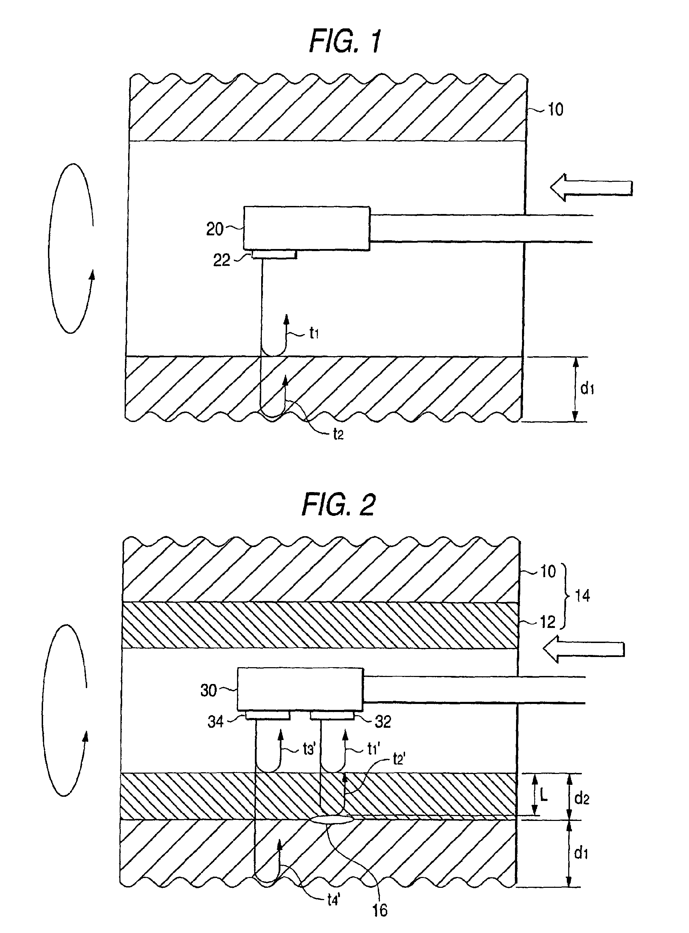

A method for inspecting a clad pipe according to the present invention will be described below in detail with reference to the drawings. Figs. 1 and 2 are conceptual views showing the method for inspecting a clad pipe according to an embodiment of the present invention. In this embodiment, the method for inspecting a clad pipe has the steps of: measuring the pipe thickness; transmitting ultrasonic waves; receiving the ultrasonic waves; calculating the thickness of cladding; and distinguishing flaws.

First, the pipe thickness measuring step will be described. The pipe thickness measuring step is a step for measuring the pipe thickness of a metal pipe before cladding the metal pipe with a different kind of metal on its inner surface. The pipe thickness of the metal pipe is measured data which is required for obtaining the cladding thickness of the different kind of metal built up on the inner surface of the metal pipe. Therefore, when inspection is made only for detection of a flaw, the pipe thickness measuring step can be omitted. In addition, when the pipe thickness of the metal pipe has been already known, the pipe thickness measuring step need not be always carried out.

As the method for measuring the pipe thickness of the metal pipe, any method can be used without any particular limitation. A specific and preferable example of the method for measuring the pipe thickness of the metal pipe is a method in which ultrasonic waves are made incident on the metal pipe perpendicularly so that a difference between the arrival time of the echo at the top surface of the metal pipe and the arrival time of the echo at the bottom surface of the metal pipe is measured.

When ultrasonic waves are used for measuring the pipe thickness of the metal pipe, the ultrasonic waves may be made incident on the inner surface of the metal pipe or on the outer surface of the metal pipe. Incidentally, when the surface roughness of one of the outer and inner surfaces of the metal pipe is larger than that of the other surface, it is preferable that ultrasonic waves are made incident on the smaller one in surface roughness.

The metal pipe which serves as a main pipe of the clad pipe to which the present invention is applied is comprised a coarse crystal grain structure. Specifically, the coarse crystal grain structure means a structure in which the grain size is in a range of 50 $\mu$m to 1,000 $\mu$m. Specifically, a centrifugal cast pipe is a preferred example of the metal pipe having such a coarse crystal grain structure.

When ultrasonic waves are used for measuring the pipe thickness of the metal pipe having such a coarse crystal grain structure, longitudinal ultrasonic waves with wide-band characteristic are preferably used as the ultrasonic waves. If longitudinal ultrasonic waves with narrow-band characteristic are used as the ultrasonic waves for inspecting the metal pipe having such a coarse crystal grain structure, resolving power is undesirably lowered, because both the pulse width of the echo reflected on the top surface of the metal pipe and the pulse width of the echo reflected on the bottom surface of the metal pipe are widened.

When longitudinal ultrasonic waves with wide-band characteristic are used, the frequency range of the ultrasonic waves is preferably selected to be in a range of 2 MHz to 10 MHz, both inclusively. If the frequency is lower than 2 MHz, the resolving power of the echo reflected on the bottom surface of the metal pipe is undesirably lowered. On the other hand, if ultrasonic waves with a frequency higher than 10 MHz are made incident on the metal pipe having such a coarse crystal grain structure, the ultrasonic waves are attenuated greatly by scatter in grain boundaries so that clear reflected echoes cannot be obtained undesirably. The frequency range of the ultrasonic waves is especially preferably selected to be in a range of 3.5 MHz to 6 MHz, both inclusively.

Fig. 1 is a conceptual view showing the pipe thickness measuring step. The measurement of the pipe thickness by use of ultrasonic waves is performed as follows. First, as shown in Fig. 1, a first sensor 20 provided with an ultrasonic probe 22 is inserted into the inside of the metal pipe 10 before cladding. A suitable contact medium is interposed between the ultrasonic probe 22 and the inner surface of the metal pipe 10. Although water is generally used as the contact medium, another contact medium may be used.

Then, ultrasonic waves are made incident onto the metal pipe 10 from the ultrasonic probe 22, so that the arrival time ($t_1$) of the top surface reflected echo reflected from the inner surface of the metal pipe 10 and the arrival time ($t_2$) of the bottom reflected echo reflected from the outer surface of the metal pipe 10 are measured. When $d_1$ is the pipe thickness of the metal pipe, and $v_1$ is the sonic velocity of ultrasonic waves in the inside of the metal pipe 10, the arrival time difference ($\Delta t = t_2 - t_1$) between the reflected echoes, the pipe thick-

ness $d_1$ and the sonic velocity $v_1$ satisfy the relational expression 1:

Expression 1

$$\Delta t = 2d_1/v_1$$

The sonic velocity $v_1$ is a known value decided on the basis of the material of the metal pipe 10. Hence, it is obvious that the pipe thickness $d_1$ of the metal pipe can be calculated by the expression 1 if the arrival time difference $\Delta t$ between the reflected echoes is measured.

Incidentally, in order to improve accuracy in measurement of the pipe thickness of the metal pipe 10, it is preferable that the pipe thickness is measured on the whole surface of the metal pipe 10 while the first sensor 20 is moved in the direction of the length of the metal pipe 10 and, at the same time, the metal pipe 10 is rotated around the axis of the metal pipe 10. Incidentally, when the pipe thickness of the metal pipe 10 varies in only one of the direction of the circumference and the direction of the length of the metal pipe, the pipe thickness may be measured only in the direction in which the pipe thickness varies.

Next, the ultrasonic wave transmitting step will be described. The ultrasonic wave transmitting step is a step in which longitudinal ultrasonic waves with wide-band characteristic are made incident on the inner surface of the clad pipe after the different kind of clad metal is built up on the inner surface of the metal pipe to form the clad pipe.

As described above, longitudinal ultrasonic waves with wide-band characteristic are used as the ultrasonic waves made incident on the clad pipe for the purpose of suppressing lowering of the resolving power of reflected echoes caused by widening of the pulse width.

The frequency range of the ultrasonic waves is selected to an optimal range in accordance with the purpose of inspection. That is, when the purpose of inspection is to detect a flaw generated in an interface between the metal pipe and the cladding metal, longitudinal ultrasonic waves with wide-band characteristic in a frequency range of 10 MHz to 30 MHz, both inclusively, are preferably used as the ultrasonic waves. If the frequency is lower than 10 MHz, resolving power is lowed to make it difficult to detect a small flaw undesirably. If the frequency is contrariwise higher than 30 MHz, the ultrasonic waves are attenuated greatly so that clear reflected echoes cannot be obtained undesirably. The frequency range of the ultrasonic waves used for detecting a flaw is especially preferably selected to be in a range of 15 MHz to 25 MHz, both inclusively.

On the other hand, when the purpose of inspection is to measure the pipe thickness of the clad pipe, longitudinal ultrasonic waves with wide-band characteristic in a frequency range of 2 MHz to 10 MHz, both inclusively, are preferably used as the ultrasonic waves. If the frequency is lower than 2 MHz, resolving power of reflected echoes is lowed undesirably. If the frequency is contrariwise higher than 10 MHz, the ultrasonic waves are attenuated greatly undesirably by scatter in grain boundaries when the ultrasonic waves are propagated through the metal pipe 10. The frequency range of the ultrasonic waves used for measuring the pipe thickness is especially preferably selected to be in a range of 3.5 MHz to 6 MHz, both inclusively.

Next, the ultrasonic wave receiving step will be described. The ultrasonic wave receiving step is a step in which reflected echoes of the longitudinal ultrasonic waves entering the clad pipe are received on the inner surface side of the clad pipe. The reflected echoes received are varied in kind in accordance with the purpose of inspection, that is, in accordance with the frequency range of ultrasonic waves used.

When, for example, longitudinal ultrasonic waves with wide-band characteristic in a frequency range of 10 MHz to 30 MHz, both inclusively, are used in the ultrasonic wave transmitting step, a first reflected echo reflected on the inner surface of the clad pipe and a second reflected echo reflected on a flaw generated in at least one of the metal pipe and the different kind of metal are mainly received in the ultrasonic wave receiving step. On this occasion, the position of the flaw can be detected on the basis of the arrival time difference between the first reflected echo and the second reflected echo, and the size of the flaw can be estimated on the basis of the intensity of the second reflected echo.

On the other hand, when longitudinal ultrasonic waves with wide-band characteristic in a frequency range of 2 MHz to 10 MHz, both inclusively, are used in the ultrasonic wave transmitting step, a third reflected echo reflected on the inner surface of the clad pipe and a fourth reflected echo reflected on the outer surface of the clad pipe are mainly received in the ultrasonic wave receiving step. On this occasion, the pipe thickness of the clad pipe can be calculated on the basis of the arrival time difference between the third reflected echo and the fourth reflected echo.

Incidentally, when ultrasonic waves are made incident on the inner surface of the clad pipe perpendicularly, a single ultrasonic probe can be used for transmitting and receiving ultrasonic waves. On the other hand, when ultrasonic waves are made incident on the inner surface of the clad pipe obliquely, the one and same ultrasonic probe may be used for transmitting and receiving ultrasonic waves or separate ultrasonic probes (that is, a transmitting ultrasonic probe and a receiving ultrasonic probe) may be used for transmitting and receiving ultrasonic waves respectively.

One ultrasonic probe or one set of ultrasonic probes (first ultrasonic probe) for detecting a flaw and another ultrasonic probe or another set of ultrasonic probes (second ultrasonic probe) for measuring the pipe thickness may be disposed on the inner surface side of the clad pipe so that the detection of a flaw and the measurement of the pipe thickness are repeated alternately in a manner of time division. Alternatively, a plurality of first ultrasonic probes or a plurality of sets of first ultrasonic probes for detecting a flaw and a plurality of second ultrasonic probes or a plurality of sets of second ultrasonic probes for measuring the pipe thickness may be disposed on the inner surface side of the clad pipe so that inspections in each of which the detection of a flaw and the measurement of the pipe thickness are repeated alternately are performed simultaneously in a plurality of measurement points.

Fig. 2 is a conceptual view showing the ultrasonic wave transmitting step and the ultrasonic wave receiving step. When the detection of a flaw and the measurement of the pipe thickness of the clad pipe can be repeated alternately, the process is carried out as follows. First, as shown in Fig, 2, a second sensor 30 having a first ultrasonic probe 32 for detecting a flaw and a second ultrasonic probe 34 for measuring the pipe thickness is inserted into the inside of the clad pipe 14 which includes the metal pipe 10 with a coarse crystal grain structure and the different kind of clad metal 12 built up on the inner surface of the metal pipe 10. A suitable contact medium is interposed between the first ultrasonic probe 32 and the inner surface of the clad pipe 14 and between the second ultrasonic probe 34 and the inner surface of the clad pipe 14. Although water is generally used as the contact medium, another contact medium may be used.

Then, ultrasonic waves with a predetermined frequency are made incident onto the clad pipe 14 from the first ultrasonic probe 32. When the flaw 16 is not generated in the interface between the metal pipe 10 and the different kind of metal 12 in the measurement point on this occasion, only the first reflected echo reflected on the inner surface of the clad pipe 14 is received by the first ultrasonic probe 32. On the other hand, when the flaw 16 is generated, the second reflected echo reflected on the flaw 16, in addition to the first reflected echo, is received by the first ultrasonic probe 32.

When $t_1'$ is the arrival time of the first reflected echo, $t_2'$ is the arrival time of the second reflected echo, L is the distance between the inner surface of the clad pipe 14 and the flaw 16, and $v_2$ is the sonic velocity of ultrasonic waves in the inside of the different kind of metal 12, the arrival time difference ($\Delta t_{21}' = t_2' - t_1'$) between the reflected echoes, the distance L and the sonic velocity $v_2$ satisfy the relational expression 2:

Expression 2

$$\Delta t_{21}' = 2L/v_2$$

The sonic velocity $v_2$ is a known value decided on the basis of the material of the different kind of metal 12. Hence, it is obvious that the distance L between the inner surface of the clad pipe 14 and the flaw 16 can be calculated by the expression 2 if the arrival time difference $\Delta t_{21}'$ between the reflected echoes is measured.

After the reception of the first and second reflected echoes by the first ultrasonic probe 32 is completed, ultrasonic waves with a predetermined frequency are made incident onto the clad pipe 14 from the second ultrasonic probe 34. On this occasion, the frequency of the incident ultrasonic waves from the second ultrasonic probe 34 is relatively low, so that scatter of the ultrasonic waves in the inside of the metal pipe 10 is suppressed. As a result, the fourth reflected echo reflected on the outer surface of the clad pipe 14, in addition to the third reflected echo reflected on the inner surface of the clad pipe 14, is received in the second ultrasonic probe 34.

When $t_3'$ is the arrival time of the third reflected echo, $t_4'$ is the arrival time of the fourth reflected echo and $d_2$ is the cladding thickness of the different kind of metal 12 in the measurement point, the arrival time difference ($\Delta t_{43}' = t_4' - t_3'$) between the reflected echoes, the pipe thickness $d_1$, the cladding thickness $d_2$ and the sonic velocities $v_1$ and $v_2$ satisfy the relational expression 3:

Expression 3

$$\Delta t_{43}' = 2d_1/v_1 + 2d_2/v_2$$

Incidentally, in the ultrasonic wave transmitting step and the ultrasonic wave receiving step, the measures to improve accuracy in measurement of the pipe thickness of the clad pipe 14 may be taken in the same manner as described above in the pipe thickness measuring step using ultrasonic waves. That is, it is preferable that the pipe thickness is measured on the whole surface of the clad pipe 14 while the second sensor 30 is moved in the direction of the length of the clad pipe 14 and, at the same time, the clad pipe 14 is rotated around the axis of the clad pipe 14. Moreover, when the pipe thickness varies in only one of the direction of the circumference and the direction of the length of the clad pipe, the pipe thickness may be measured only in the direction in which the pipe thickness varies.

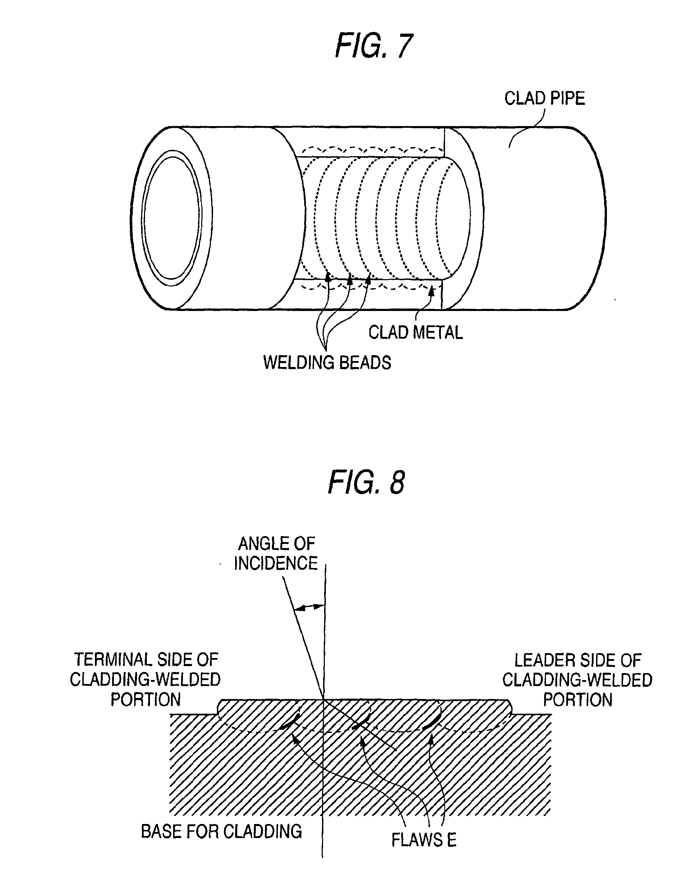

Further, as shown in Fig. 7, in a cladding-welded portion formed by welding beads (cladding material) which spread all over the inner surface of a member (metal pipe), the flaws are generated respectively to spread obliquely along fusion lines of the welding beads applied later at portions where welding beads are overlapped with each other as shown in Fig. 8. In order to inspect such flaws, ultrasonic waves are made incident onto the cladding-welded portion in a direction inclined to the termination side of the cladding-welded portion and at a predetermined angle (for example, ranging from 0° to 10°, both inclusively,) with respect to a direction perpendicular both to a direction along which the welding beads extend and to the member surface where the cladding-welded portion is formed. The incident ultrasonic waves are refracted so that the incident ultrasonic waves are further incident onto each flaw E substantially perpendicularly to a direction along which the flawEextends. Accordingly, a reflected echo of the ultrasonic waves on the flaw becomes large, so that it is possible to detect each flaw E with high accuracy.

Next, the cladding thickness calculating step will be described. The cladding thickness calculating step is a step in which the thickness of cladding of the clad pipe is calculated on the basis of the arrival time difference between the third reflected echo and the fourth reflected echo and the pipe thickness of the metal pipe.

Specifically, the cladding thickness $d_2$ can be calculated by use of the expression 3 (or expressions 1 and 3). That is, in the expression 3, the sonic velocities $v_1$ and $v_2$ are known values decided on the basis of the material of the metal pipe 10 and the material of the different kind of metal 12 respectively. Hence, when the pipe thickness $d_1$ of the metal pipe 10 before cladding and the arrival time difference $\Delta t_{43}'$ between the third reflected echo and the fourth reflected echo after cladding are measured, the cladding thickness $d_2$ can be calculated by the expression 3 (or expressions 1 and 3).

Next, the operation of the method for inspecting a clad pipe according to the present invention will be described. When ultrasonic waves are made incident on the outer surface of the clad pipe in the case where the clad pipe including a metal pipe with a coarse crystal grain structure and a different kind of clad metal built up on the inner surface of the metal pipe is to be inspected by an ultrasonic inspection method, the ultrasonic waves are scattered by grain boundaries when the ultrasonic waves are propagated through the metal pipe. For this reason, when high-frequency ultrasonic waves are used for inspection, clear reflected echoes cannot be obtained because of attenuation of the ultrasonic waves. If low-frequency ultrasonic waves are contrariwise used in order to avoid this problem, flaw detecting accuracy is lowered.

On the other hand, when ultrasonic waves are made incident on the inner surface of the interior clad pipe, the second reflected echo reflected from the flaw passes through only the layer of the different kind of metal but is not propagated through the metal pipe large in scatter. For this reason, high-frequency ultrasonic waves can be used for detecting a flaw, so that the flaw can be detected with great accuracy.

When the acoustic impedance difference between the metal pipe and the different kind of metal is small, it is difficult to measure an echo reflected from a good joint interface between the metal pipe and the different kind of metal. In order to measure the cladding thickness of the different kind of metal, it is therefore necessary to measure the pipe thickness of the metal pipe before cladding and the pipe thickness of the clad pipe and to calculate the cladding thickness on the basis of the difference between the measured thicknesses.

When the surface roughness of the outer surface of the clad pipe is large in the case where the pipe thickness of the clad pipe is to be measured by a method for making ultrasonic waves incident on the outer surface of the clad pipe, the ultrasonic waves are however scattered by the outer surface to thereby cause a large error. Particularly in a clad pipe including a centrifugal cast pipe and a different kind of clad metal built up on the inner surface of the centrifugal cast pipe, the surface roughness of the outer surface becomes larger than that of the inner surface clad with the different kind of metal. For this reason, if the pipe thickness is measured on the outer surface side, the large surface roughness of the outer surface of the clad pipe causes a large measurement error.

When ultrasonic waves are contrariwise made incident on the inner surface being small in surface roughness, scatter of the ultrasonic waves in the incident surface is suppressed. For this reason, accuracy in measurement of the pipe thickness of the clad pipe is improved and, accordingly, accuracy in measurement of the cladding thickness is also improved. In addition, when two or more ultrasonic probes or two or more sets of ultrasonic probes are used so that inspections in which the detection of a flaw and the measurement of the pipe thickness are repeated alternately are performed simultaneously in one measurement point or in two or more measurement points, the time required for the inspection can be shortened.

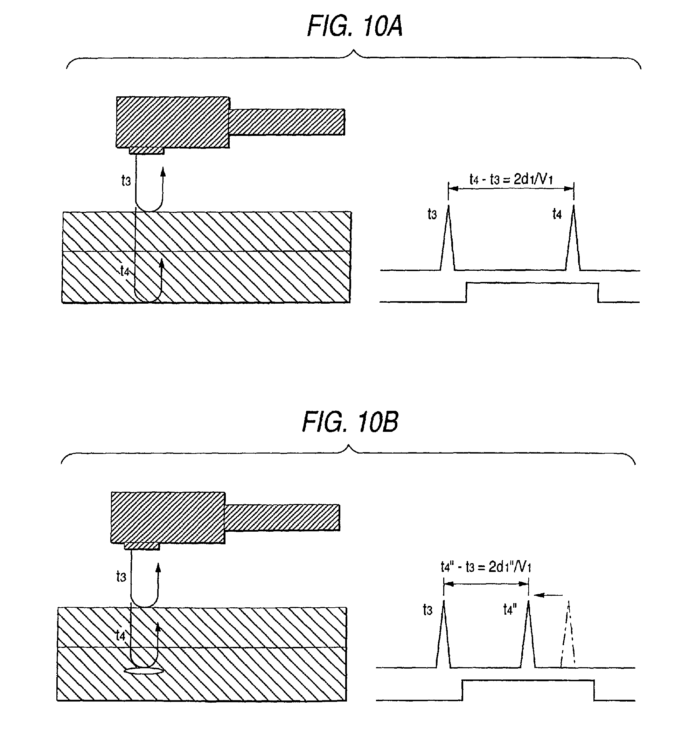

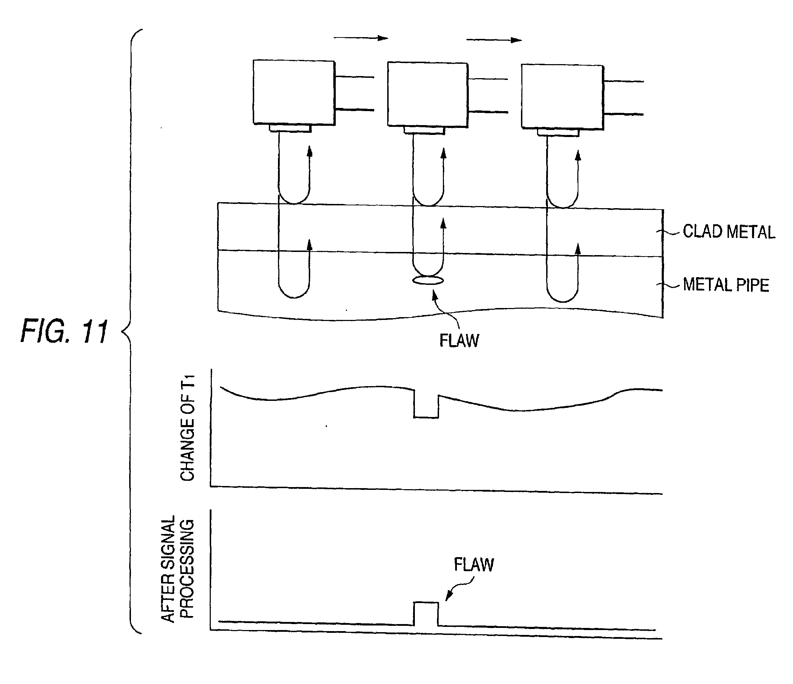

Next, a flaw distinguishing step will be described. For example, in the case where longitudinal ultrasonic waves with wide-band characteristic in a frequency range of 10 MHz to 30 MHz, both inclusively, are used in the ultrasonic wave transmitting step, a first reflected echo which is reflected from the inner surface of the clad pipe, and a second reflected echo which is reflected from a flaw generated in at least one of the metal pipe and the different kind of metal are mainly received in the ultrasonic wave receiving step. In such a manner, presence/absence of such a flaw generated in at least one of the metal pipe and the different kind of metal can be inspected by the presence/absence, size and position information of the second reflected echo. On the other hand, in the case where longitudinal ultrasonic waves with wide-band characteristic in a frequency range of 2 MHz to 10 MHz, both inclusively, are used in the ultrasonic wave transmitting step, a third reflected echo which reflected from the inner surface of the clad pipe, and a fourth reflected echo which is reflected from the outer surface of the clad pipe are received at the portion where no flaw is present in the ultrasonic wave receiving step as shown in Fig. 10A. However, the fourth reflected echo is reflected at the portion where a flaw is present in the ultrasonic wave receiving step as shown in Fig. 10B. In this case, a sudden change appears in the pipe thickness information detected continuously, as shown in Fig. 11. Accordingly, based on change components (high frequency components) of a signal obtained by removing low frequency components from the pipe thickness information of the metal pipe, the pipe thickness information being continuously obtained on the basis of a difference between the arrival time of the third reflected echo and the arrival time of the fourth reflected echo, it is possible to detect presence/absence of a flaw which may be generated in the whole region from the vicinity of an interface between the metal pipe and the different kind of metal to the outer surface of the clad pipe.

(Example 1)

After a clad chromium alloy was built up, by a thickness of 3 mm, on an inner surface of an 8 mm-thick centrifugal cast pipe, a 1 mm-diameter flat bottom hole was formed in an outer surface of the centrifugal cast pipe. Then, longitudinal ultrasonic waves with wide-band characteristic at a frequency of 20 MHz were made perpendicularly incident onto the inner surface of the clad pipe obtained thus, so that a flaw echo (hereinafter referred to as "F echo") reflected from the artificial flaw was detected.

(Comparative Example 1)

After a clad pipe was produced in the same manner as in Example 1, a 1 mm-diameter flat bottom hole was formed in the inner surface of the centrifugal cast pipe. Then, longitudinal ultrasonic waves with wide-band characteristic at a frequency of 3.5 MHz were made perpendicularly incident onto the outer surface of the clad pipe obtained thus, so that an F echo was detected.

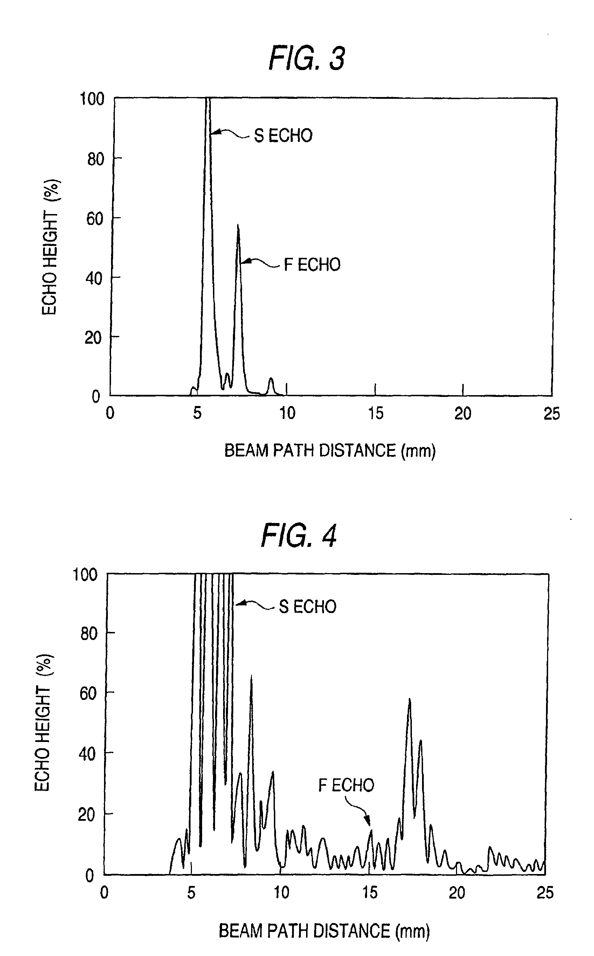

Figs. 3 and 4 show flaw detecting waveforms obtained in Example 1 and Comparative Example 1 respectively. In Figs. 3 and 4, the horizontal axis indicates beam path distance, and the vertical axis indicates echo height. The "beam path distance" expresses the distance between the ultrasonic probe and a reflecting source.

It is obvious from Fig. 4 that the F echo can be detected even in Comparative Example 1 in which ultrasonic waves are made incident on the outer surface of the clad pipe. This is because low-frequency ultrasonic waves are used for suppressing scatter of the ultrasonic waves. It is however obvious that the echo height of the F echo is so small that flaw detecting accuracy is low.

Contrariwise, in Example 1 in which ultrasonic waves are incident on the inner surface of the clad pipe, it is obvious that a clear F echo is detected as shown in Fig. 3. This is because high-frequency ultrasonic waves can be used as the ultrasonic waves made incident on the inner surface of the clad pipe to thereby improve flaw detecting accuracy.

(Example 2)

Longitudinal ultrasonic waves with wide-band frequency at a frequency of 5 MHz were made perpendicularly incident onto the inner surface of the clad pipe produced in Example 1, so that the pipe thickness of the clad pipe was measured along the lengthwise direction.

(Comparative Example 2)

Longitudinal ultrasonic waves with wide-band frequency at a frequency of 5 MHz were made perpendicularly incident onto the outer surface side of the clad pipe produced in Example 1, so that the pipe thickness of the clad pipe was measured along the lengthwise direction.

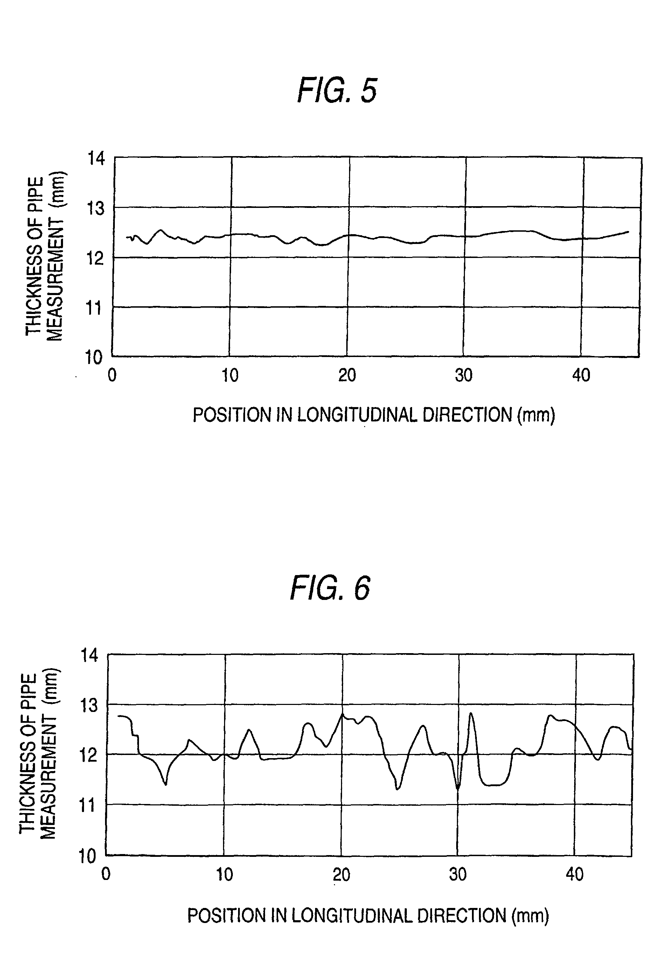

Figs. 5 and 6 show the relation between the position in the lengthwise direction and the pipe thickness in the clad pipes obtained in Example 2 and Comparative Example 2 respectively. It is obvious from Figs. 5 and 6 that variation in pipe thickness in accordance with the measurement position is small in Example 2 whereas the measured value of the pipe thickness varies greatly in accordance with the position in the lengthwise direction in Comparative Example 2. This is because ultrasonic waves are made incident on the inner surface small in surface roughness to suppress scatter of the ultrasonic waves in the incident surface to thereby improve accuracy in measurement of the pipe thickness.

(Example 3)

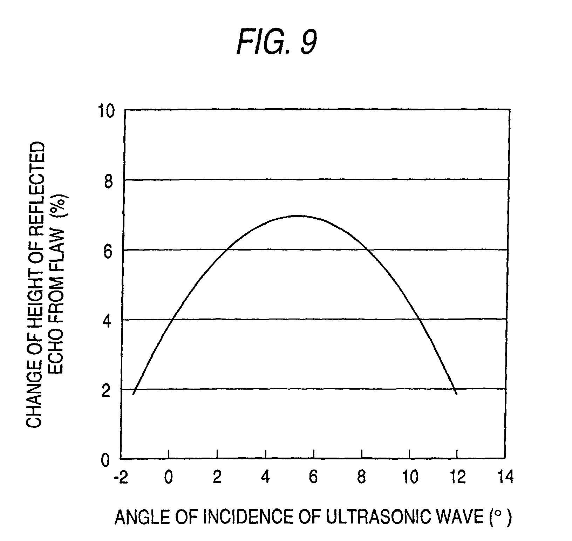

A clad chromium alloy was built up, by a 3 mm thickness, on an inner surface of an 8 mm-thick centrifugal cast pipe under a welding condition that flaws were generated intentionally, so that a clad pipe having natural flaws (incomplete fusion) was formed in a simulated manner. Next, longitudinal ultrasonic waves with wideband characteristic at a frequency of 20 MHz were made incident onto the inner surface of the thus obtained clad pipe while the angle of incidence was changed. Thus, an F-echo which was reflected from each natural flaw was detected. Fig. 9 shows the relation between the angle of incidence and the height of the reflected echo. From Fig. 9, it is apparent that when ultrasonic waves are made incident onto a cladding-welded portion in a direction inclined to a termination side of the cladding-welded portion and at a predetermined angle (for example, an angle ranging from 0° to 10°, both inclusively,) with respect to a perpendicular direction, the reflected echo of the ultrasonic waves from the flaw becomes large so that each flaw can be detected with high accuracy.

(Example 4)

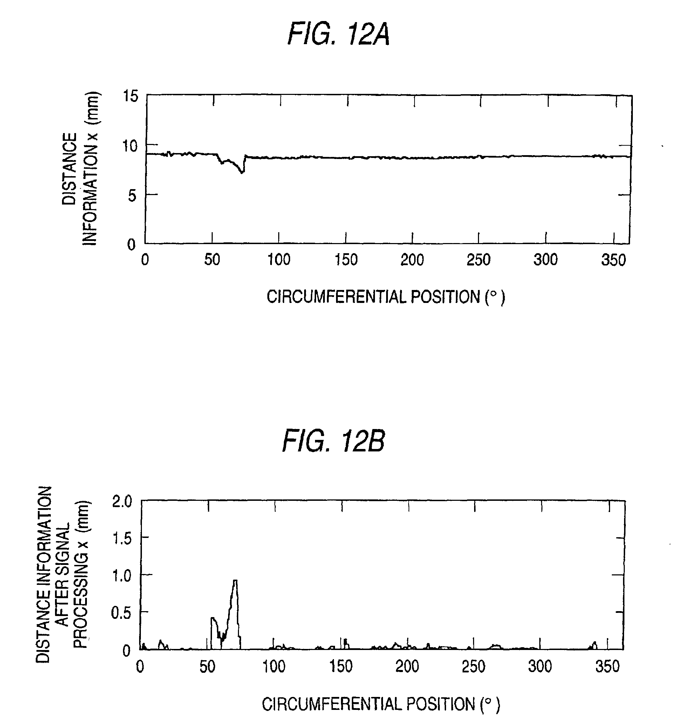

After a clad chromium alloy was built up, by a 3 mm thickness, on an inner surface of an 8 mm-thick centrifugal cast pipe, longitudinal ultrasonic waves with wide-band characteristic at a frequency of 5 MHz were made incident perpendicularly onto the inner surface of the clad pipe while the clad pipe was rotated at rotation speed of 30 rpm, in order to obtain values of a pipe thickness. Fig. 12A is a graph showing plotted values of the pipe thickness $t_1$ obtained thus. From Fig. 12A, it is apparent that there is a region where the pipe thickness $t_1$ changes suddenly at the circumferential position of 55° to 70°. Further, Fig. 12B shows data obtained by removing low frequency components from Fig. 12A. In Fig. 12B, the vertical axis represents the distance from the outer surface of the centrifugal cast pipe to the flaw. From Fig. 12B, it is apparent that there is a relatively large interior flaw at the circumferential position of 55° to 70°.

Although embodiments of the present invention have been described above in detail, the present invention is not limited to the embodiments at all but various modifications may be made without departing from the gist of the present invention.

In the method for inspecting a clad pipe according to the present invention, longitudinal ultrasonic waves with wide-band characteristic are incident on the inner surface of the clad pipe which includes a metal pipe with a coarse crystal grain structure and a different kind of clad metal built up on the inner surface of the metal pipe, so that reflected echoes of the longitudinal ultrasonic waves are received on the inner surface side of the clad pipe. Hence, high-frequency ultrasonic waves can be used for detecting a flaw so that there is an effect that flaw detecting accuracy can be improved. Moreover, ultrasonic waves are made incident on the different kind of clad metal built up on the metal pipe. Hence, scatter of the ultrasonic waves in the incident surface can be suppressed. There is also an effect that both accuracy in measurement of the pipe thickness and accuracy in measurement the thickness of cladding can be improved.

Particularly when longitudinal ultrasonic waves with wide-band characteristic in a frequency range of 10 MHz to 30 MHz, both inclusively, are used for detecting a flaw, there is an effect that a flaw in an interface between the metal pipe and the different kind of metal can be detected with great accuracy. Moreover, when longitudinal ultrasonic waves with wide-band characteristic in a frequency range of 2 MHz to 10 MHz, both inclusively, are used for measuring the pipe thickness of the clad pipe or the cladding thickness of the different kind of metal, there is also an effect that the pipe thickness or the cladding thickness can be measured with great accuracy even in the case where the clad pipe contains the metal pipe having a coarse crystal grain structure as its main pipe.

In addition, when a plurality of ultrasonic probes are disposed on the inner surface side of the clad pipe so that ultrasonic waves different in frequency are transmitted and received alternately, the detection of a flaw and the measurement of the pipe thickness can be performed substantially simultaneously. There is an effect that the time required for inspection can be shortened.

Summarized, the invention provides a method for inspecting a clad pipe, having the steps of: transmitting longitudinal ultrasonic waves with wide-band characteristic to make it incident on an inner surface of a clad pipe, the clad pipe including a metal pipe with a coarse crystal grain structure and a different kind of clad metal built up on an inner surface thereof; and receiving reflected echoes of the longitudinal ultrasonic waves on the inner surface side thereof. When a flaw generated in an interface between the metal pipe and the different kind of metal is to be detected, the longitudinal ultrasonic waves in a frequency range of 10 to 30 MHz are preferably used as the ultrasonic waves. When the pipe thickness of the clad pipe is to be measured, the longitudinal ultrasonic waves in a frequency range of 2 to 10 MHz are preferably used as the ultrasonic waves.

**Claims**

1. A method for inspecting a clad pipe (14), comprising the steps of:

   preparing a clad pipe (14) including a metal pipe (10) with a coarse crystal grain structure and a different kind of clad metal (12) built up on an inner surface of the metal pipe (10);

   transmitting longitudinal ultrasonic waves with wide-band characteristic to make the ultrasonic waves incident on an inner surface of the clad pipe (14); and

   receiving reflected echoes of the longitudinal ultrasonic waves on the inner surface side of the clad pipe (14).

2. The method for inspecting a clad pipe (14) according to claim 1, wherein the metal pipe (10) is a centrifugal cast pipe.

3. The method for inspecting a clad pipe (14) according to claim 1 or 2, wherein the metal pipe (10) has a grain size ranging from 50 μm to 1,000 μm.

4. The method for inspecting a clad pipe according to any one of claims 1, 2 and 3, wherein:

   the transmitting step is provided so that the longitudinal ultrasonic waves with wide-band characteristic in a frequency range of 10 MHz to 30 MHz, both inclusively, are made incident on the clad pipe (14) ; and

   the receiving step is provided for receiving a first reflected echo of the longitudinal ultrasonic waves reflected on the inner surface of the clad pipe (14) and a second reflected echo of the longitudinal ultrasonic waves reflected on a flaw (16) generated in an interface between the metal pipe (10) and the different kind of metal and cladded portion.

5. The method for inspecting a clad pipe (14) according to any one of claims 1, 2 and 3, wherein:

   the transmitting step is provided so that the longitudinal ultrasonic waves with wide-band characteristic in a frequency range of 2 MHz to 10 MHz, both inclusively, are made incident on the clad pipe (14) ; and

   the receiving step is provided for receiving a third reflected echo of the longitudinal ultrasonic waves reflected on the inner surface of the clad pipe (14) and a fourth reflected echo of the longitudinal ultrasonic waves reflected on an outer surface of the clad pipe (14).

6. The method for inspecting a clad pipe (14) according to any one of claims 1, 2 and 3, wherein:

   the transmitting step is provided so that first longitudinal ultrasonic waves with wide-band characteristic in a frequency range of 10 MHz to 30 MHz, both inclusively, and second longitudinal ultrasonic waves with wide-band characteristic in a frequency range of 2 MHz to 10 MHz, both inclusively, are made alternately incident on the clad pipe (14) in a condition that a first ultrasonic probe (32) for transmitting and receiving the first longitudinal ultrasonic waves and a second ultrasonic probe (34) for transmitting and receiving the second longitudinal ultrasonic waves are disposed on the inner surface side of the clad pipe; and

   the receiving step uses the first and second ultrasonic probes for alternately receiving:

   a first reflected echo of the first longitudinal ultrasonic waves reflected on the inner surface of the clad pipe (14);

   a second reflected echo of the first longitudinal ultrasonic waves reflected on a flaw (16) generated in at least one of the metal pipe (10) and the different kind of metal;

a third reflected echo of the second longitudinal ultrasonic waves reflected on the inner surface of the clad pipe (14); and

a fourth reflected echo of the second longitudinal ultrasonic waves reflected on an outer surface of the clad pipe (14).

7. The method for inspecting a clad pipe (14) according to claim 5 or 6, further comprising the steps of:

measuring a pipe thickness of the metal pipe (10) before the metal pipe (10) is clad with the different kind of metal on the inner surface of the metal pipe (10); and

calculating a thickness of cladding of the clad pipe (14) on the basis of an arrival time difference between the third reflected echo and the fourth reflected echo and the pipe thickness of the metal pipe (10) obtained by the measuring step.

8. The method for inspecting a clad pipe (14) according to claim 4 or 6, further comprising the step of:

inspecting presence/absence of any flaw (16) in a cladding-welded portion by making longitudinal ultrasonic waves incident onto the cladding-welded portion in a predetermined direction which is perpendicular to a direction along which cladding-welding beads extend and is perpendicular to a member surface of the cladding-welded portion, being inclined to a termination side of the cladding-welded portion and at an angle ranging from 0° to 10°, both inclusively, with respect to the predetermined direction.

9. The method for inspecting a clad pipe (14) according to any one of claims 5, 6 and 7, further comprising the step of:

distinguishing a flaw (16) on the basis of a change in a signal which is obtained by removing low frequency components from pipe thickness information of the metal pipe (10), the pipe thickness information being continuously obtained from the arrival time difference between the third reflected echo and the fourth reflected echo.

10. Method for providing a clad pipe (14), said comprising:

inspecting said clad pipe (14) with the method according to one of claims 1 to 9 and determining a thickness of a clad metal (12) of said clad pipe (14) and/or a thickness of a metal pipe (10) of said clad pipe (14) and/or a type of flaw (16) in said clad metal (12) and/or said metal pipe (10) and/or an interface therebetween;

providing said clad pipe (14) if said thickness of said clad metal (12) and/or said thickness of said metal pipe (10) and/or said flaw (16) are within predetermined ranges; and

not providing said clad pipe (14) if said thickness of said clad metal (12) and/or said thickness of said metal pipe (10) and/or said flaw (16), respectively, are out of said predetermined ranges.

## FIG. 1

## FIG. 2

## FIG. 3

## FIG. 4

## FIG. 5

Graph: THICKNESS OF PIPE MEASUREMENT (mm) vs POSITION IN LONGITUDINAL DIRECTION (mm)

## FIG. 6

Graph: THICKNESS OF PIPE MEASUREMENT (mm) vs POSITION IN LONGITUDINAL DIRECTION (mm)

## FIG. 7

CLAD PIPE

CLAD METAL

WELDING BEADS

## FIG. 8

ANGLE OF
INCIDENCE

TERMINAL SIDE OF
CLADDING-WELDED
PORTION

LEADER SIDE OF
CLADDING-WELDED
PORTION

BASE FOR CLADDING

FLAWS E

## FIG. 9

## FIG. 10A

$$t_4 - t_3 = 2d_1/V_1$$

t3

t4

## FIG. 10B

$$t_4'' - t_3 = 2d_1''/V_1$$

t3

t4''

FIG. 11

CLAD METAL

METAL PIPE

FLAW

CHANGE OF T₁

AFTER SIGNAL
PROCESSING

FLAW

## FIG. 12A

## FIG. 12B